# EUROPÄISCHE PATENTSCHRIFT

(11) **EP 0 709 267 B1**
(45) Veröffentlichungstag und Bekanntmachung des Hinweises auf die Patenterteilung: **03.03.1999**
(21) Anmeldenummer: 95116024.1
(22) Anmeldetag: 11.10.1995
(51) Int. Cl.: B60S 1/38

(54) **Wischvorrichtung für Scheiben von Kraftfahrzeugen**
Wiper arrangement for motor vehicle windscreens
Dispositif d'essuie-glaces de véhicules automobiles

(30) Priorität: 26.10.1994 DE 4438223
(43) Veröffentlichungstag der Anmeldung: 01.05.1996
(73) Patentinhaber: ROBERT BOSCH GMBH, 70442 Stuttgart (DE)
(72) Erfinder: Dams, Eric, B-3400 Landen (BE); Grammens, Joris, B-3350 Linter (BE); Aerts, Karel, B-3200 Aarschot (BE); Criel, Paul, B-3800 St. Truiden (BE); Verelst, Hubert, Dipl.-Ing. (TH), B-3300 Tienen (BE); Nys, Dirk, B-3390 Tielt-Winge (BE)

(56) Entgegenhaltungen:
- EP-A- 0 267 010
- DE-A- 4 025 280
- GB-A- 2 041 730

## Beschreibung

### Stand der Technik

Die Erfindung geht aus von einer Wischvorrichtung nach der Gattung des Hauptanspruchs. Es ist schon eine Wischvorrichtung bekannt (DE-A-40 32 428), bei der das Gelenkstück an den freien Enden seiner U-Schenkel die freien Enden der U-Schenkel des Oberbügels hintergreifende Rasthaken aufweist, so daß das Gelenkstück fest mit dem Oberbügel verbunden ist. Danach wird der Oberbügel über den Unterbügel gedruckt, wobei die Gelenkvorsprünge über den in seiner Breite nachgebenden Unterbügel geschoben werden müssen, bis die Gelenkvorsprünge in die Lagerausnehmungen des Unterbügels gelangen. Dabei besteht aber die Gefahr, daß der Unterbügel bleibend verformt wird, so daß zwecks einer sicheren Lagerung der beiden Bügel aneinander der Unterbügel wieder auseinander gedrückt werden muß.

### Vorteile der Erfindung

Die erfindungsgemäße Wischvorrichtung mit den kennzeichnenden Merkmalen des Hauptanspruchs hat demgegenüber den Vorteil, daß bei der Montage der beiden Bügel aneinander, ohne Verformung des Unterbügels, lediglich die Gelenkvorsprünge in die Lagerausnehmungen eingebracht werden müssen. Dies geschieht in einer bestimmten Montageposition des untergeordneten Bügels zum übergeordneten Bügel, ohne daß dazu einer dieser Bügel verformt werden muß. Wenn danach der untergeordnete Bügel in seine Betriebsposition geschwenkt wird, gelangen dessen Sicherungsmittel in eine Position zu den Rastmitteln des Gelenkstücks, in der sie diese in ihren Raststellungen sichern. Ein weiterer Vorteil der Erfindung ist darin zu sehen, daß die Elemente der Gelenke völlig von den Rast- und Sicherungsmitteln getrennt sind, so daß nach einer einfachen Montage eine zuverlässige Sicherung der Gelenkelemente in deren vorschriftsmäßige Betriebsstellung sichergestellt ist.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

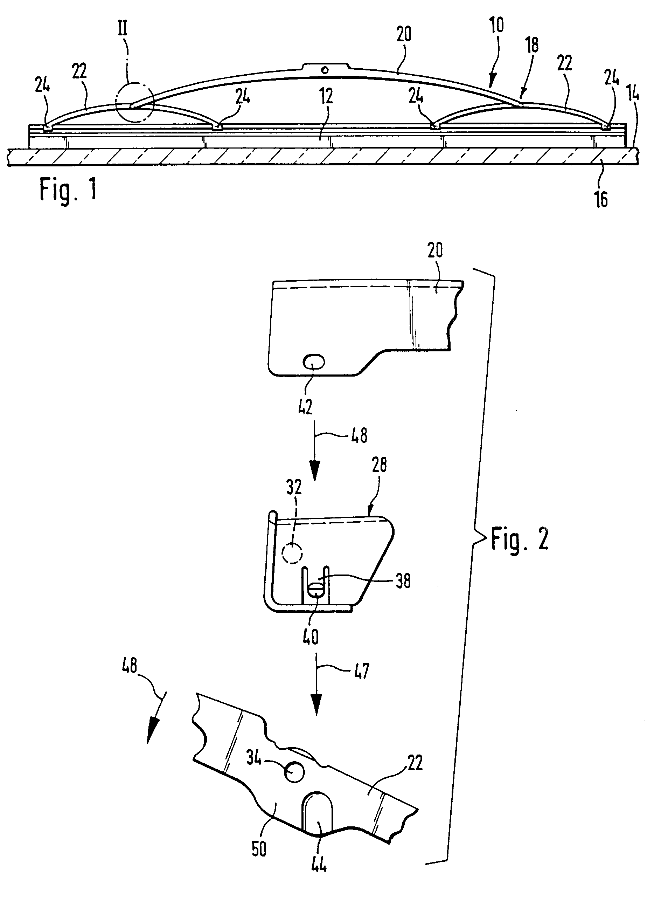

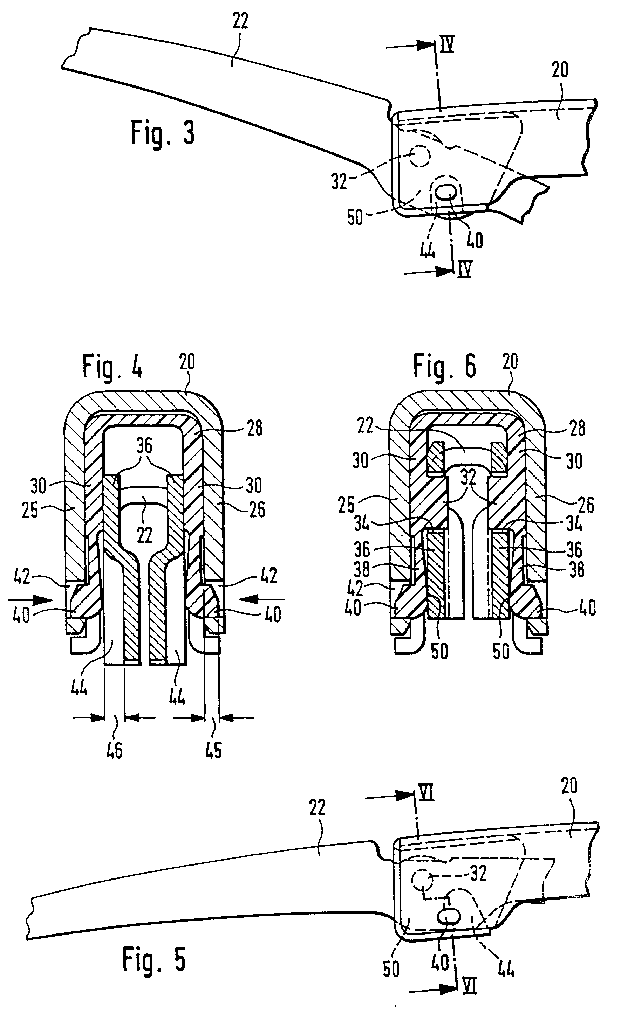

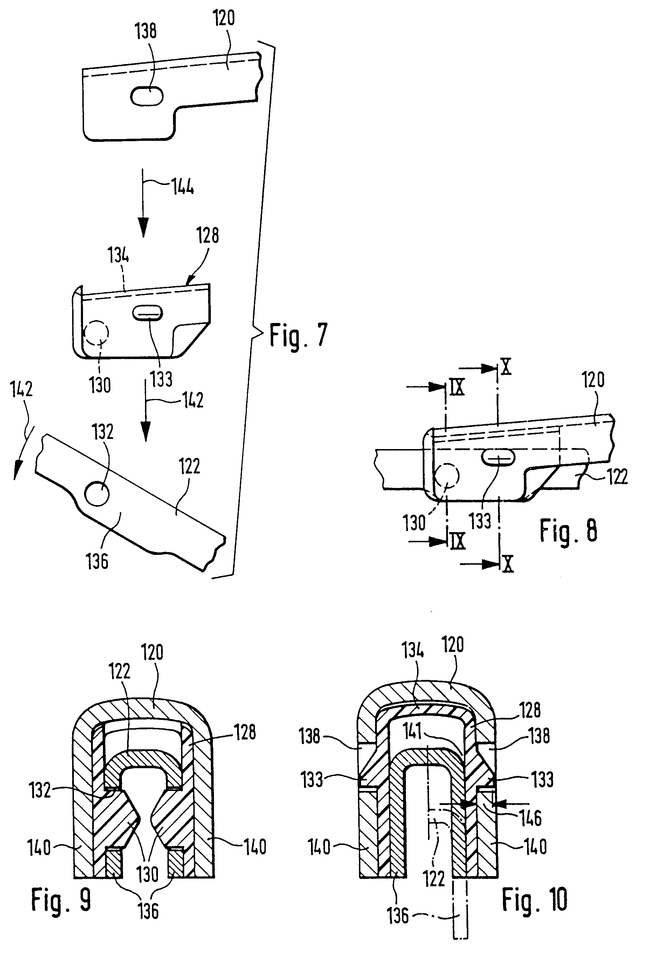

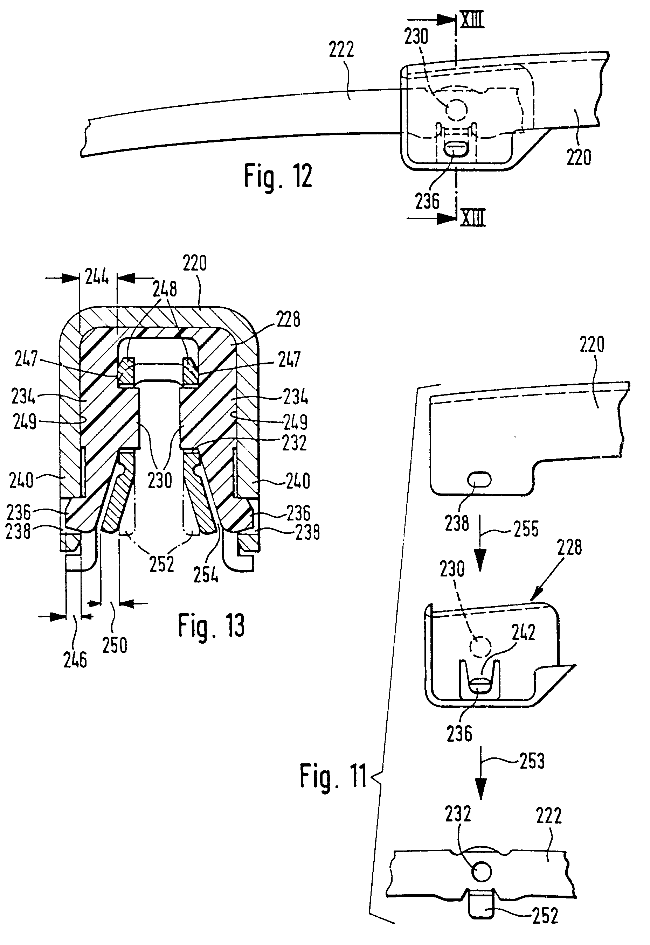

Ausführungsbeispiele der Erfindung sind in der Zeichnung dargestellt und in der nachfolgenden Beschreibung näher erläutert. Es zeigen Figur 1 ein an einer zu wischenden, im Schnitt dargestellten Scheibe angelegtes Wischblatt in Seitenansicht, Figur 2 Teilansichten der Gelenkbereiche des übergeordneten und eines untergeordneten Bügels die in Figur 1 mit II bezeichnet sind sowie eine Ansicht eines zum Gelenk gehörenden Gelenkteils, wobei alle diese Teile in einer Vor-Montagestellung angeordnet und vergrößert dargestellt sind, Figur 3 die Bauteile gemäß Figur 2 in Montagestellung, Figur 4 einen Schnitt durch den Gelenkbereich entlang der Linie IV-IV in Figur 3 in vergrößerter Darstellung, Figur 5 die Bauteile gemäß Figur 3 in Betriebsstellung, Figur 6 einen Schnitt durch den Gelenkbereich entlang der Linie VI-VI in Figur 5 in vergrößerter Darstellung, Figur 7 Teilansichten der Gelenkbereiche des übergeordneten Bügels und eines untergeordneten Bügels, die in Figur 1 mit II bezeichnet sind gemäß einer anderen Ausführungsform der Erfindung, wobei alle diese Teile in einer Vor-Montagestellung angeordnet und vergrößert dargestellt sind, Figur 8 die Bauteile gemäß Figur 7 zusammengebaut in Betriebsstellung dargestellt, Figur 9 einen Schnitt durch den Gelenkbereich gemäß Figur 8, entlang der Linie IX-IX in vergrößerter Darstellung, Figur 10 einen Schnitt durch den Gelenkbereich gemäß Figur 8, entlang der Linie X-X in vergrößerter Darstellung, Figur 11 Teilansichten der Gelenkbereiche des übergeordneten Bügels und eines untergeordneten Bügels die in Figur 1 mit II bezeichnet sind sowie eine Ansicht eines zum Gelenk gehörenden Gelenkteils, wobei alle diese Teile in einer Vor-Montagestellung angeordnet und vergrößert dargestellt sind, gemäß einer weiteren Ausführungsform der Erfindung, Figur 12 die Bauteile gemäß Figur 11 zusammengebaut und in Betriebsstellung dargestellt und Figur 13 einen Schnitt durch den Gelenkbereich gemäß Figur 12, entlang der Linie XIII-XIII in vergrößerter Darstellung.

### Beschreibung der Ausführungsbeispiele

Ein in Figur 1 dargestelltes Wischblatt 10 liegt mit einer Wischleiste 12 auf der einen, äußeren Oberfläche 14 einer zu wischenden Scheibe 16 eines Kraftfahrzeuges an. Das Wischblatt 10 hat ein Tragbügelgestell 18, mit einem übergeordneten Ober- oder Hauptbügel 20, an dessen beiden Enden jeweils ein untergeordneter Unter- oder Krallenbügel 22 waagebalkenartig angelegt ist. Die beiden untergeordneten Bügel 22 halten mit krallenartigen Fortsätzen 24 die Wischleiste 12. Im folgenden soll auf die Gelenkverbindung zwischen dem Oberbügel 20 und einem der Unterbügel 22 näher eingegangen werden. Einer dieser beiden Gelenkbereiche ist in Figur 1 mit II bezeichnet.

Eine erste Ausführungsform der Erfindung soll anhand der Figuren 2 bis 6 erläutert werden. Sowohl der Oberbügel 20 als auch der Unterbügel 22 haben einen im wesentlichen U-förmigen Querschnitt. Die Figuren 4 bis 6 zeigen, daß der Unterbügel 22 in seiner Montagestellung vollständig in den U-Querschnitt des Oberbügels 20 eintaucht. D.h., daß die U-Schenkel 25 und 26 des Oberbügels 20 den Unterbügel 22 übergreifen. Um eine ordnungsgemäße Gelenkverbindung zwischen dem Oberbügel 20 und dem Unterbügel 22 herzustellen, ist ein aus einem biegsamen Kunststoff hergestelltes Gelenkteil 28 erforderlich (Figur 2), das in Montageposition ebenfalls einen U-förmigen Querschnitt hat (Figur 4 und 6). An jeder Innenseite der U-Schenkel 30 des U-förmigen Gelenkstücks 28 ist jeweils ein zapfenartiger Gelenkvorsprung 32 angeordnet. Die beiden zapfenartigen Lager- oder Gelenkvorsprünge 32 sind so gegeneinander gerichtet, daß deren Zapfenachsen miteinander fluchten. In Figur 2 sind diese Lagerzapfen 32 durch einen gestrichelten Kreis angedeutet. Den beiden Lagerzapfen 32 sind Lagerbohrungen 34 zugeordnet, welche in den U-Schenkeln 36 des Unterbügels 22 vorhanden sind. Wie insbesondere die Figur 2 zeigt, sind in den beiden U-Schenkeln 30 des Gelenkteils 28 zungenartige Lappen 38 ausgespart, die aus den Ebenen der U-Schenkel 30 herausgebogen werden können. Diese Lappen 38 weisen nach außen gerichtete Rastnocken 40 auf (Figuren 2, 4 und 6), denen entsprechende Durchbrüche 42 in den U-Schenkeln 26 des Oberbügels 20 zugeordnet sind. Insbesondere die Figuren 2 und 4 veranschaulichen, daß der Unterbügel 22 an den Außenseite seiner U-Schenkel 36 angeordnete Vertiefungen oder Aussparungen 44 mit einer Tiefe 46 aufweist.

Im folgenden soll die Montage der zum Tragbügelgestells 20, 22, 28 gehörenden Bauteile erläutert werden. In einem ersten Montageschritt wird das Gelenkstück 28 unter geringfügiger Aufbiegung seiner U-Schenkel 38 auf den Unterbügel 22 aufgerastet (Pfeil 47 in Figur 2). Dabei gelangen die Lagerzapfen 32 in ihre Lagerbohrungen 34 des Unterbügels 22. In einem nächsten Montageschritt (Pfeil 48) wird der Oberbügel 20 über den mit dem Gelenkstück 28 versehenen Unterbügel 22 geschoben. Dabei ist zu beachten, daß der Unterbügel 22 eine Position einnimmt, wie sie in den Figuren 2 und 3 dargestellt ist. In dieser Position befinden sich die Lappen 38 über den Vertiefungen 44 des Unterbügels 22. Die Lappen 38 können somit in die Vertiefungen 44 ausweichen, damit die Rastzähne 40 in ihre Aussparungen 42 gelangen können (Vgl. dazu auch Figur 4). Dazu ist es nötig, daß die Tiefe 46 der Vertiefungen 44 zumindest so groß ist wie die wirksame Rastzahnlänge 45. Wenn der Unterbügel 22 nun in Richtung des Pfeils 48 in seine Betriebsposition geschwenkt wird, gelangt ein, der Vertiefung 44 benachbarter, als Sicherungsmittel dienender Bereich 50 der U-Schenkel 36 des Unterbügels 22 an die Innenseiten der Lappen 38 und hindern diese am Ausweichen nach innen. Die Rastzähne 38 können also, so lange der Unterbügel 22 in seiner Betriebsstellung (Figur 5) ist, nicht mehr aus ihren Aussparungen 42 im Oberbügel 20 gelangen. Die eben beschriebene Montage ist auch anhand der Figuren 3 und 5 nachzuvollziehen.

Bei der Ausführungsform gemäß der Figuren 7 bis 10 ist eine ähnliche Ausgestaltung der zum Gelenk gehörenden Bauelemente vorgesehen. Auch in diesem Fall gehören zur Gelenkverbindung zwischen dem im Querschnitt U-förmigen Oberbügel 120 und dem im Querschnitt U-förmigen Unterbügel 122 Gelenkstücke 128, die im wesentlichen dem schon beschriebenen Gelenkstück 28 entsprechen. Ebenso weist das aus einem biegbaren Kunststoff bestehende Gelenkstück 128, das im Querschnitt ebenfalls U-förmig ausgestaltet ist, nach innen, also gegeneinander gerichtete Gelenkzapfen 130 auf, denen Lagerbohrungen 132 im Unterbügel 122 zugeordnet sind. Abweichend von dem schon beschriebenen Ausführungsbeispiel, sind bei dieser Ausführungsform aber die als Rastzähne ausgebildete Rastmittel 133 nahe der U-Basis 134 des im Querschnitt U-förmigen Gelenkteils 128 angeordnet. Weiter hat der Unterbügel 122 bei dieser Ausführungsform keine Vertiefungen oder Einsenkungen, sondern seine beiden u-förmigen Schenkel 136 erstrecken sich in jeweils zueinander parallelen Ebenen. Den Rastzähnen 133 sind Durchbrüche oder Rastausnehmungen 138 in den U-Schenkeln 140 des Oberbügels 120 zugeordnet.

Zur Montage der Tragbügelgestellteile 120, 122 aneinander wird zunächst das Gelenkstück 128 in der schon beschriebenen Weise auf den Unterbügel 122 aufgebracht (Pfeil 142 in Figur 7), so daß die Gelenk- oder Lagerzapfen 130 in ihre Lagerbohrungen 132 im Unterbügel 122 gelangen. Danach wird der Unterbügel 122 in den Oberbügel 120 eingebracht (Pfeil 144), wobei die Rastzähne 133 um das notwendige Maß, das sich durch die Höhe 146 der Rastzähne 133 bestimmt nach innen in einen Raum 141 ausweichen können, der sich vorübergehend dadurch ergibt, weil sich der in seiner in Figur 7 dargestellten Montagestellung befindliche Unterbügel 122 nur teilweise vollständig innerhalb des Oberbügels 120 befindet. Wenn die Rastzähne 133 nun in ihren Rastausnehmungen 138 des Oberbügels 120 eingebracht sind, wird der Unterbügel 122 in Richtung des Pfeiles 142 (Figur 7) geschwenkt, so daß er aus einer in Figur 10 strichpunktierten dargestellten Montagestellung in seine in Figur 10 ausgezogen dargestellte Betriebsposition gelangt, in welcher die U-Schenkel 136 ein Ausweichen der Rastzähne 133 nach innen verhindern, weil das Maß zwischen den voneinander abgewandten Schenkelflächen des Unterbügels 122 auf das Maß zwischen den einander zugewandten Schenkelflächen des eingebauten Gelenkstücks 128 abgestimmt ist. Die Sicherungsmittel des Unterbügels 122 werden bei diesem Ausführungsbeispiel also durch die U-Schenkel 136 des Unterbügels 122 selbst gebildet.

Eine weiter Ausführungsform der Erfindung soll anhand der Figuren 11 bis 13 erläutert werden. Der Grundaufbau des Oberbügels 220 und des Unterbügels 222 stimmt im wesentlichen mit dem schon weiter oben beschriebenen Grundaufbau der entsprechenden Bauelemente überein. Ebenso ist zur gewünschten Gelenkverbindung zwischen diesen beiden Bauteilen ein aus einem biegsamen Kunststoff hergestelltes Gelenkstück 228 erforderlich (Figur 11). Auch weist das im Querschnitt U-förmige Gelenkstück 228 nach innen, gegeneinandergerichtete und miteinander fluchtende Gelenkzapfen 230 auf, denen Gelenkbohrungen 232 im Unterbügel 222 zugeordnet sind. Weiter sind an den voneinander abgewandten Außenseiten der U-Schenkel 234 voneinander wegweisende Rastzähne 236 angeordnet, die mit Rastausnehmungen 238 in den U-Schenkeln 240 des Oberbügels 220 zusammenarbeiten. Weiter hat das im Querschnitt U-förmige Gelenkstück 228 in seinen U-Schenkeln 234 frei geschnittene Lappen 242 (Figur 11), welche an ihren freien Enden die Rastzähne 236 tragen. Die Lappen 242 sind also zusammen mit den Rastzähnen 236 aus der Ebene der U-Schenkel 234 heraus biegbar. Wie Figur 13 veranschaulicht, ist die Dicke 244 der U-Schenkel 234 größer als das Rastmaß 246, mit welchem die Rastzähne 236 in die Rastausnehmungen 238 des Oberbügels 220 hineingreifen. Somit ist das Maß zwischen den beiden voneinander abgewandten Flächen 247 der U-Schenkel 248 des Unterbügels 222 erheblich kleiner als das Maß zwischen den beiden einander zugewandten Innenflächen 249 der beiden U-Schenkel 240 des Oberbügels 220. Weiter zeigt Figur 13, daß, ausgehend von den Gelenkzapfen 230, sich die Dicke 244 der U-Schenkel 234 des Gelenkteils 228 zu deren freien Enden hin verjüngt. Im Bereich der Rastzähne 236 ergeben sich so keilförmige Räume 254, welche ein Auslenken der Lappen 242 beziehungsweise der an diesen sitzenden Rastzähnen 236 um ein Maß 250 gestatten, das größer ist als die wirksame Rastlänge 246 der Rastzahne 236. Wie Figur 11 zeigt, hat der Unterbügel 222 im Bereich der Lagerbohrungen 232 an seinen U-Schenkeln 248 angeordnete Biegelappen 252, die sich über die freien Enden der U-Schenkel 248 hinaus erstrecken. Diese Biegelappen 252 sind in Figur 13 strichpunktiert in einer Vor-Montageposition gezeichnet. Es zeigt sich, daß in dieser Vor-Montageposition sich zwischen den freien Enden der U-Schenkel 234 und den Biegelappen 252 keilförmige Räume 254 ergeben, welche ein Auslenken der Biegelappen 252 um mindestens das Rastmaß 246 ermöglichen.

Die Montage der Gestellteile 220, 222 soll anhand insbesondere der Figuren 11 und 13 erläutert werden. Es wird zunächst das Gelenkstück 228 in der schon bei den anderen beiden Ausführungsformen erläuterten Weise auf den Unterbügel 222 aufgebracht (Pfeil 253), wobei die Gelenkzapfen 230 in die ihnen zugeordneten Lagerbohrungen 232 de5 U-Schenkeln 248 des Unterbügels 222 einrasten. Nach dem Aufrasten des Gelenkteils 228 auf den Unterbügel 222 zeigt sich, daß zwischen den Außenseiten der Biegelappen 252 und den diesen zugewandten Innenseiten der U-Schenkel 234 des Gelenkstücks 228 keilförmige Räume 254 verbleiben, welche ein Ausweichen der Rastlappen 242 und damit der Rastzähne 236 erlauben, wenn der Oberbügel 220 über das auf dem Unterbügel 222 sitzende Gelenkstück 228 geschoben wird (Pfeil 255). Das heißt, daß die Rastlappen 242 mit den Rastzähnen 236 um das Maß 246 (Figur 13) aufeinander- zu auslenken können, bis die Rastzähne 236 in die ihnen zugeordneten Rastausnehmungen 238 einrasten. Danach werden die den Lappen 242 der U-Schenkel 234 des Gelenkstücks 228 zugeordneten Biegelappen 252 aus ihrer strichpunktiert gezeichneten Montageposition in ihre in Figur 13 im Schnitt ausgezogen dargestellte Betriebsposition auseinandergebogen, so daß sie künftig ein Lösen der Rastzähne 236 aus ihren Rastausnehmungen 238 verhindern. Die Biegelappen 252 bilden also Sicherungsmittel des Unterbügels 222 zum Festhalten des Rastmittel 236 des Gelenkstücks 228.

Allen Ausführungsbeispielen ist gemeinsam, daß der Unterbügel 22 bzw. 122 bzw. 222 Sicherungsmittel 50 bzw. 144 bzw. 252 aufweist, welche die Rastmittel 40 bzw. 133 bzw. 236 der Gelenkstücke 28 bzw. 128 bzw. 228 in deren Raststellungen festhalten.

## Patentansprüche

1. Wischvorrichtung für Scheiben (16) von Kraftfahrzeugen, mit einem Wischblatt (10), das ein mehrgliedriges Gestell (18) hat, an welchem ein auf der Scheibe angelegtes Wischelement (12) gehalten ist und das Gestell (18) einen übergeordneten, im Querschnitt im wesentlichen U-förmigen Bügel (20 bzw. 120 bzw. 220) aufweist, an dessen zumindest einem Ende ein zwischen die U-Schenkel des übergeordneten Bügels eintauchender, untergeordneter U-förmiger Bügel (22 bzw. 122 bzw. 222) waagebalkenartig angelegt ist und zwischen den einander zugewandten Flächen der U-Schenkel der Ober- und Unterbügel ein mit dem Oberbügel verrastbares, zumindest im Einbauzustand U-förmiges, biegbares Gelenkstück (28 bzw. 128 bzw. 228) angeordnet ist, das mit an den Innenseiten seiner U-Schenkel angeordneten, gegeneinander gerichteten Gelenkvorsprüngen (32 bzw. 130 bzw. 230) in Lagerausnehmungen des Unterbügels greift und mit an den Außenseiten seiner U-Schenkel angeordneten Rastmitteln (40 bzw. 133 bzw. 236) mit Gegenrastmitteln (42 bzw. 138 bzw. 238) des Oberbügels zusammenarbeitet, dadurch gekennzeichnet, daß der Unterbügel (22 bzw. 122 bzw. 222) Sicherungsmittel (50 bzw. 136 bzw. 252) aufweist, welche die Rastmittel (40 bzw. 133 bzw. 236) des Gelenkstücks (28 bzw. 128 bzw. 228) in einer Montagestellung freigegeben und in deren Betriebsstellung festhalten (Figuren 6, 10, 13).

2. Wischvorrichtung nach Anspruch 1, dadurch gekennzeichnet, daß die Rastmittel (40 bzw. 133 bzw. 236) durch an den Außenseiten der U-Schenkel des Gelenkstücks (28 bzw. 128 bzw. 228) angeordnete Vorsprünge gebildet sind, welche in diesen zugeordneten Durchbrüche (42 bzw. 138 bzw. 238) in den U-Schenkeln des Oberbügels (20 bzw. 120 bzw. 220) greifen.

3. Wischvorrichtung nach Anspruch 2, dadurch gekennzeichnet, daß die als Rastzähne (40 bzw. 236) ausgebildeten Rastmittel an freigesparten Lappen (38 bzw. 242) der U-Schenkel (38 bzw. 234) des Gelenkstücks (28 bzw. 228) angeordnet sind.

4. Wischvorrichtung nach Anspruch 3, dadurch gekennzeichnet, daß Sicherungsmittel durch Bereiche (50 bzw. 136 bzw. 252) der U-Schenkel (36 bzw. 136 bzw. 248) der Unterbügel (22) bzw. (222) gebildet sind, deren Maß zwischen den voneinander abgewandten Schenkelflächen auf das Maß zwischen den einander zugewandten Schenkelflächen des eingebauten Gelenkstücks (28 bzw. 128 bzw. 228) abgestimmt ist.

5. Wischvorrichtung nach Anspruch 4, dadurch gekennzeichnet, daß der Unterbügel (22) an den Außenseiten seiner U-Schenkel (36) angeordnete Aussparungen (44) mit einer Tiefe (46) hat, welche ein Auslenken der Lappen (38) um mindestens das Maß (45) der wirksamen Rastzahnlänge erlauben, wenn der Unterbügel (22) in einer von seiner Betriebsstellung (Figuren 5 und 6) abweichenden Montagestellung (Figuren 3 und 4) in den mit dem Gelenkstück (28) versehenen Oberbügel (20) eingebracht wird.

6. Wischvorrichtung nach Anspruch 5, dadurch gekennzeichnet, daß die Aussparungen als Einsenkungen (44) in den U-Schenkeln (36) des Unterbügels (22) ausgebildet sind.

7. Wischvorrichtung nach Anspruch 2, dadurch gekennzeichnet, daß die als Rastzähne (133) aus gebildeten Rastmitteln nahe der U-Basis (134) an den U-Schenkeln (129) des Gelenkstücks (128) angeordnet sind.

8. Wischvorrichtung nach Anspruch 7, dadurch gekennzeichnet, daß die Sicherungsmittel durch Bereiche der U-Schenkel (136) der Unterbügel (122) gebildet sind, deren Maß zwischen den voneinander abgewandten Schenkelflächen auf das Maß zwischen den einander zugewandten Schenkelflächen des eingebauten Gelenkstücks (128) abgestimmt ist.

9. Wischvorrichtung nach Anspruch 2, dadurch gekennzeichnet, daß die als Rastzähne (236) ausgebildeten Rastmittel an U-Schenkeln (234) des Gelenkstücks (228) angeordnet sind, deren Dicke (244) größer ist als die wirksame Rastlänge (246) der Rastzähne (236).

10. Wischvorrichtung nach Anspruch 9, dadurch gekennzeichnet, daß die Rastzähne (236) an freigeschnittenen Lappen (242) der U-Schenkel (234) angeordnet sind.

11. Wischvorrichtung nach Anspruch 10, dadurch gekennzeichnet, daß die einander zugeordneten Seiten der Lappen (242) der U-Schenkel (234) so divergieren, daß sich zwischen deren freien Enden und den Ebenen der U-Schenkel (248) des Unterbügels (222) keilförmige Räume (254) ergeben, welche ein Auslenken der an den Lappen (242) sitzenden Rastzähne (236) um ein Maß gestatten, das größer ist als die wirksame Rastlänge (246) der Rastzähne 236.

12. Wischvorrichtung nach Anspruch 11, dadurch gekennzeichnet, daß die U-Schenkel (248) des Unterbügels (222) mit Biegelappen (252) versehen sind, welche bei montierten Tragbügelgestell (220, 222) den Lappen (242) der U-Schenkel (234) des Gelenkstücks (228) zugeordnet sind.

13. Wischvorrichtung nach Anspruch 12, dadurch gekennzeichnet, daß die Biegelappen (252) die Sicherungsmittel des Unterbügels (222) zum Festhalten der Rastmittel (236) des Gelenkstücks (228) bilden.

## Claims

1. Wiper device for motor-vehicle windscreens (16), having a wiper blade (10) which has a multi-section frame (18) on which a wiper element (12) placed on the windscreen is held, and the frame (18) has a main bow (20 or 120 or 220) which is essentially U-shaped in cross section and on at least one end of which a secondary U-shaped bow (22 or 122 or 222), which is embedded between the U legs of the main bow, is placed in the manner of a balance arm, and a flexible hinge part (28 or 128 or 228) which can be latched to the upper bow and is U-shaped at least in the installed state is arranged between the mutually facing surfaces of the U legs of the upper and lower bows, which hinge part wraps into bearing recesses in the lower bow by means of hinge projections (32 or 130 or 230) which are arranged on the insides of its U legs and there directed counter to one another, and by means of latching means (40 or 133 or 236) which are arranged on the outsides of its U legs interacts with counter latching means (42 or 138 or 238) of the upper bow, characterized in that the lower bow (22 or 122 or 222) has securing means (50 or 136 or 252) which release the latching means (40 or 133 or 236) of the hinge part (28 or 128 or 228) in an assembly position and secure them in their operational position (Figures 6, 10, 13).

2. Wiper device according to Claim 1, characterized in that the latching means (40 or 133 or 236) are formed by projections which are arranged on the outsides of the U legs of the hinge part (28 or 128 or 228) and grip into apertures (42 or 138 or 238) which are assigned to them, in the U legs of the upper bow (20 or 120 or 220).

3. Wiper device according to Claim 2, characterized in that the latching means, which are designed as latching teeth (40 or 236), are arranged on cut-out tabs (38 or 242) of the U legs (38 or 234) of the hinge part (28 or 228).

4. Wiper device according to Claim 3, characterized in that securing means are formed by regions (50 or 136 or 252) of the U legs (36 or 136 or 248) of the lower bows (22 or 222) whose dimension between the leg surfaces which face away from one another is matched to the dimension between the mutually facing leg surfaces of the installed hinge part (28 or 128 or 228).

5. Wiper device according to Claim 4, characterized in that the lower bow (22) has cut-outs (44) which are arranged on the outsides of its U legs (36), are of a depth (46) and permit the tabs (38) to be deflected by at least the dimension (45) of the effective latching-tooth length, if the lower bow (22), in an assembly position (Figures 3 and 4) which deviates from its operational position (Figures 5 and 6), is placed into the upper bow (20) provided with the hinge part (28).

6. Wiper device according to Claim 5, characterized in that the cut-outs are designed as counter-sunk portions (44) in the U legs (36) of the lower bow (22).

7. Wiper device according to Claim 2, characterized in that the latching means, which are designed as latching teeth (133), are arranged in the vicinity of the U base (134) on the U legs (129) of the hinge part (128).

8. Wiper device according to Claim 7, characterized in that the securing means are formed by regions of the U legs (136) of the lower bows (122) whose dimension between the leg surfaces facing away from one another is matched to the dimension between the mutually facing leg surfaces of the installed hinge part (128).

9. Wiper device according to Claim 2, characterized in that the latching means, which are designed as latching teeth (236), are arranged on U legs (234) of the hinge part (228), the thickness (244) of which legs is greater than the effective latching length (246) of the latching teeth (236).

10. Wiper device according to Claim 9, characterized in that the latching teeth (236) are arranged on cut-free tabs (242) of the U legs (234).

11. Wiper device according to Claim 10, characterized in that the mutually associated sides of the tabs (242) of the U legs (234) diverge in such a manner that wedge-shaped spaces (254) are produced between their free ends and the planes of the U legs (248) of the lower bow (222), which spaces permit the latching teeth (236), which are seated on the tabs (242), to be deflected by a dimension which is greater than the effective latching length (246) of the latching teeth (236).

12. Wiper device according to Claim 11, characterized in that the U legs (248) of the lower bow (222) are provided with bending tabs (252) which, when the supporting-bow frame (220, 222) is fitted, are assigned to the tabs (242) of the U legs (234) of the hinge part (228).

13. Wiper device according to Claim 12, characterized in that the bending tabs (252) form the securing means of the lower bow (222) for securing the latching means (236) of the hinge part (228).

## Revendications

1. Dispositif pour essuyer les glaces (16) de véhicules automobiles, dans lequel :
- une raclette (10) comporte une armature (18) à plusieurs éléments sur laquelle est maintenu sur la glace un balai d'essuyage (12), cette armature comprenant un étrier (20, 120 ou 220) supérieur dont la section a essentiellement la forme d'un U,
- sur au moins une des extrémités de l'étrier supérieur est monté, enfoncé entre les branches de cet étrier, un étrier inférieur (22, 122 ou 222) à la manière d'un fléau de balance à section en U,
- entre les faces en regard des branches appartenant à l'étrier supérieur et à l'étrier inférieur est montée une pièce d'articulation flexible (28, 128 ou 228) en forme de U qui peut être verrouillée à l'état monté sur l'étrier supérieur,
- la pièce d'articulation porte sur les faces internes de ses branches en U des saillies d'articulation (32, 130 ou 230) dirigées l'une vers l'autre et en prise dans des évidements jouant le rôle de paliers, pratiqués dans l'étrier inférieur,
- la pièce d'articulation porte sur les faces externes de ses branches en U des moyens d'arrêt (40, 133 ou 236) coopérant avec des contreparties d'arrêt (42, 138 ou 238) appartenant à l'étrier supérieur,
caractérisé en ce que
l'étrier inférieur (22, 122 ou 222) est équipé de moyens de sécurité (50, 136 ou 252) qui, en position de montage, dégagent les moyens d'arrêt (40, 133 ou 236) portés par la pièce d'articulation (28, 128 ou 228) tandis qu'ils assurent leur maintien en position de service (figures 6, 10, 13).

2. Dispositif selon la revendication 1,
caractérisé en ce que
les moyens d'arrêt (40, 133 ou 236) sont constitués par des saillies situées sur les faces externes des branches en U de la pièce d'articulation (28, 128 ou 228) et en prise dans des perçages correspondants (42, 138 ou 238) pratiqués dans les branches en U de l'étrier supérieur (20, 120 ou 220).

3. Dispositif selon la revendication 2,
caractérisé en ce que
les moyens d'arrêt sous la forme de dents d'arrêt (40 ou 236) sont situés sur des languettes (38 ou 242) découpées dans les branches en U (38 ou 234) de la pièce d'articulation (28 ou 228).

4. Dispositif selon la revendication 3,
caractérisé en ce que
les moyens de sécurité sont constitués par des zones (50, 136 ou 252) des branches en U (36, 136 ou 248) des étriers inférieurs (22 ou 222) et dont la distance séparant les faces les plus éloignées de leurs branches est accordée à la distance séparant les faces les plus proches des branches de la pièce d'articulation (28, 128 et 228) en position d'incorporation.

5. Dispositif selon la revendication 4,
caractérisé en ce que
l'étrier inférieur (22) présente sur les faces externes de ses branches en U (36) des évidements (44) dont la profondeur (46) est telle qu'elle permet de dévier les languettes (38) d'au moins la longueur effective d'arrêt des dents d'arrêt quand l'étrier inférieur (22) lors de son montage, est introduit dans l'étrier supérieur (20) équipé de la pièce d'articulation (28), dans une position (figures 3 et 4) s'écartant de la position de service (figures 3 et 4).

6. Dispositif selon la revendication 5,
caractérisé en ce que
les évidements sont des creux (44) pratiqués dans les branches en U (36) de l'étrier inférieur (22).

7. Dispositif selon la revendication 2,
caractérisé en ce que
les moyens d'arrêt constitués par des dents d'arrêt (133) sont situés sur les branches en U (129) de la pièce d'articulation, près de la base (134) du U.

8. Dispositif selon la revendication 7,
caractérisé en ce que
les moyens de sécurité sont constitués par des zones de branches en U (136) de l'étrier inférieur (122) dont la distance séparant les faces les plus éloignées de leurs branches est accordée à la distance séparant les faces en regard de la pièce d'articulation (128) incorporée.

9. Dispositif selon la revendication 2,
caractérisé en ce que
les moyens d'arrêt constitués par des dents d'arrêt (236) sont portés par les branches en U (234) de la pièce d'articulation (228), l'épaisseur (244) de ces branches étant supérieure à la longueur effective d'arrêt (246) des dents d'arrêt (236).

10. Dispositif selon la revendication 9,
caractérisé en ce que
les dents d'arrêt (236) sont montées sur les sections libres des languettes (242) découpées dans les branches en U (234).

11. Dispositif selon la revendication 10,
caractérisé en ce que
les faces en regard des languettes (242) des branches en U (234) divergent de manière à créer entre leurs extrémités libres et les plans des branches en U (248) de l'étrier inférieur (222), des espaces (254) en forme de coins permettant de dévier les dents d'arrêt (236) situées sur les languettes (242) d'une quantité supérieure à la longueur effective d'arrêt (246) des dents d'arrêt (236).

12. Dispositif selon la revendication 11,
caractérisé en ce que
les branches en U (248) de l'étrier inférieur (222) sont équipées de languettes flexibles (252) qui sont associées aux languettes (242) des branches en U (234) de la pièce d'articulation (228) quand l'armature (220, 222) constituée par les étriers est montée.

13. Dispositif selon la revendication 12,
caractérisé en ce que
les languettes flexibles (252) constituent les moyens de sécurité de l'étrier inférieur (222) servant à maintenir les moyens d'arrêt (236) de la pièce d'articulation (228).
